(19) Europäisches Patentamt
European Patent Office
Office européen des brevets

(11) Publication number: 0 431 468 A1

(12) **EUROPEAN PATENT APPLICATION**

(21) Application number: 90122837.9

(22) Date of filing: 29.11.90

(51) Int. Cl.5: A01N 43/40

(30) Priority: 01.12.89 JP 313738/89

(43) Date of publication of application: 12.06.91 Bulletin 91/24

(84) Designated Contracting States: CH DE FR GB IT LI NL

(71) Applicant: SUMITOMO CHEMICAL COMPANY, LIMITED
Kitahama 4-chome 5-33
Chuo-ku Osaka 541(JP)

(72) Inventor: Yano, Toshihiko
15-10-103, Kusunoki-cho
Ashiya, Hyogo(JP)
Inventor: Ishiwatari, Takao
4-9-17, Sakuragaoka
Mino, Osaka(JP)
Inventor: Torisu, Yoko
2-12, Kasuga-cho
Ashiya, Hyogo(JP)
Inventor: Matsuo, Noritada
29-2, Minaminoazayamamichi
Itami, Hyogo(JP)
Inventor: Senbo, Satoshi
2-10-4-412, Sonehigashimachi
Toyonaka, Osaka(JP)

(74) Representative: Vossius & Partner
Siebertstrasse 4 P.O. Box 86 07 67
W-8000 München 86(DE)

(54) **A poison bait for control for harmful insects.**

(57) A poison bait composition which comprises as an active component a pyridylpyridone compound of the formula:

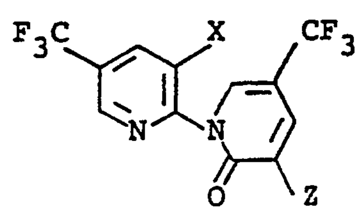

wherein X is a fluorine atom or a chlorine atom and Z is a chlorine atom or a cyano group, which is useful for controlling harmful insects.

EP 0 431 468 A1

# A POISON BAIT FOR CONTROL OF HARMFUL INSECTS

The present invention relates to a poison bait for control of harmful insects. More particularly, it relates to a poison bait composition comprising a pyridylpyridone compound as an active component, which is useful for controlling insects undesirable or harmful to human or animal life.

Some poison baits for control of undesirable or harmful insects are disclosed in GB-A-2070430, US-A-4564631, JP-A-58-52205, EP-A-0272824, JP-A-61-119131, JP-A-63-218604, and JP-B-63-26721. The active components in those poison baits are mainly chosen from boric acid, organic phosphorus insecticides, carbamate insecticides, pyrethroid insecticides and aminohydrazone insecticides. However, these active components have more or less disadvantages.

For instance, poison baits comprising boric acid do not produce a sufficiently high control effect on insects, particularly cockroaches. Further, their boric acid content is usually so high as about 5 to about 50 % by weight. As well known, an oral toxicity of boric acid causes a serious problem, and even a talcum powder containing boric acid in an amount of only 5 % by weight accidentally leads to death of an infant (11th Japan Pharmacopoeia, C-1475 (1986)). Furthermore, boric acid controls insects quite slowly, and it takes usually about one week or more after feeding until their death, during which they are attacked by diarrhea and produce soft excrements, whereby their habitats and surroundings are considerably stained.

Poison baits comprising organic phosphorus insecticides or carbamate insecticides have characteristic odors so that insects ignore them and their control effect is considerably reduced. Further, the active components are readily hydrolyzed even with a slightest amount of water to produce specific odors so that the attractive effect to insects are decreased. Said hydrolysis naturally results in lowering the contents of the active components, and the insecticidal activity is thus remarkably deteriorated.

Poison baits comprising pyrethroid insecticides have characteristic nervous stimulation so that insects ignore them and their insecticidal activity is lowered. Even when taken, the active components are apt to be hydrolyzed in insects, and the insecticidal effect is greatly reduced.

With regard to poison baits comprising aminohydrazone insecticides, their insecticidal effect on insects, especially cockroaches, is exerted very slowly, and it will usually take at least one week until the death of insects. During such process, insects produce convulsions and paralysis and remain in a half-dead state over several days. This is quite unfavorable from the viewpoint of sanitation.

As a result of the extensive study, it has now been found that a poison bait composition comprising a pyridylpyridone compound of the formula:

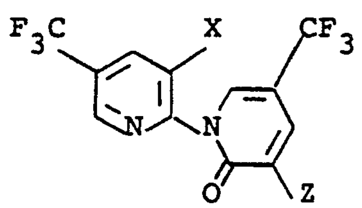

(I)

wherein X is a fluorine atom or a chlorine atom and Z is a chlorine atom or a cyano group and at least one of food attractants and bait materials can produce an excellent controlling effect on insects without any disadvantage as seen in said conventional poison baits. This invention is based on the above finding.

A number of pyridylpyridone compounds and their insecticidal activity are generically known (JP-A-61-72754). From the investigation on those pyridylpyridone compounds, it has been known that said pyridylpyridone compound (I) shows a prominent insecticidal activity on undesirable or harmful insects and is usefull as a poison bait for controlling those insects.

The poison bait composition of the invention produces the following advantageous properties without showing any disadvantage as seen in said conventional poison baits: (1) it shows an extremely high insecticidal activity on insects; (2) it exerts its insecticidal activity rapidly on insects so that the insects are lead to death quickly; (3) it does not produce such odor or stimulation as ignored by insects; (4) the active component is hardly decomposed in an insect body, and its insecticidal activity is not deteriorated; (5) the activie component does not cause diarrhea to insects which took the same; (6) insects which took the active component do not maintain convulsions or paralysis in a half-dead state over a long period of time; (7) the active component exerts a remarkable insecticidal activity against insects having a resistivity to organic phosphorus insecticides, carbamate insecticides or pyrethroid insecticides; (8) the oral toxicity of the active component to warm-blooded animals is extremely low; (9) the active component in the poison bait

composition is hardly degraded over a long period of time.

As stated above, the poison bait composition of the invention is characteristic in comprising the pyridylpyridone compound (I) as an active component. Among pyridylpyridone compounds of the formula (I), preferred are those wherein X is a chlorine atom and particularly preferred is the one wherein X and Z are each a chlorine atom.

In addition to said active component, the poison bait compositon comprises at least one of food attractants and bait materials. Some food attractants are also usable as bait materials. No particular limitation is present on food attractants and bait materials, and they may be chosen from plant powders (e.g. potato powders, sweet-potato powders, corn powders, flours, rice powders, taro powders, starch powders, fibrous powders, wooden powders, bark powders and rhizome powders), plant oils (e.g. soybean oil, rapeseed oil, sesame oil, wheat-germ oil, corn oil, castor oil, peanut oil, cotton seed oil, coconut oil, olive oil, palm oil and tolu oil), plant substances (e.g. potato, sweet-potato, taro, garlic, onion, malt, rice bran, and wheat husks), plant processed goods (e.g. cellulose (crystalline), dextrin, dry yeast (powder) and solid animal food powder) ), animal substances (e.g. egg), animal processed goods (e.g. fish powders, chrysalis powders, Euphauciasea powders, shrimp powders, fish egg powders and meat extracts), processed food products (e.g. powdered milk, milk, biscuit powders and liquors), proteins (e.g. albumin, globulin, casein and amino acids), saccharides (e.g. sucrose, glucose, fluctose, lactose, black sugar, brown sugar, soft brown sugar, maltose, sugar cane juice, blackstrap molasses and honey), fatty acids (e.g. oleic acid, linolic acid, linoreic acid and stearic acid), flavoring agents (e.g. cheese flavor, butter flavor, peanut flavor, peach flavor, strawberry flavor, milk flavor and onion flavor), chemical attractants (e.g. α-oxy acids, α-oxy esters, α-ketols, ar-α-tetrarol, ar-β-tetralol, ac-α-tetralol, α-naphthol, β-naphthol, furaneol (4-hydroxy-2,5-dimethyl-3(2H)-furanone), 4,5-dihydroxy-2,5-dimethyl-4-oxo-3-furanyl methyl ester, 4,5-dihydroxy-2,5-dimethyl-4-oxo-3-furanyl ethyl ester, 2-cyclohexyl-5-methyl-3(2H)-furanone, 4-acetyl-5-methyl-3(2H)-furanone and 2,5-dimethyl-3(2H)-furanone), massive pheromones (e.g. 1-dimethylamino-2-methyl-2-propanol and its hydrochloride, formate, acetate, oxalate, stearate, etc., 1-amino-2-methyl-2-propanol, 1-diethylamino-2-methyl-2-propanol and 1-methylamino-2-methyl-2-propanol), and directive pheromones (e.g. (3S,4R,6E,10Z)-3,4,7,11-tetramethyl-trideca-6,10-dienal, (Z)-9-hexadecenal, 2,5-dimethylpyrazine, 3-methyl-2,5-dimethylpyrazine, Z,E-α-furanecene, and E,E-α-furanecene).

When desired, the bait composition may further contain other additives and/or auxiliary agents such as adsorbents (e.g. base mat (solid fibril board made of a mixture of cotton linter and pulp) ), fillers (e.g. silica gel, silicic acid, diatomaceous earth, kaolin, talc, clay, highly dispersed silicic acid, white carbon, bentonite, zeolite, sepiolite and attapulgite), binders (e.g. irish moss, tragacanth gum, sodium carboxymethyl celluolose, methyl cellulose, hydroxypropyl cellulose and Taba powders),anti-oxidants (e.g. erythorbic acid, sodium erythorbate, dibutyl hydroxytoluene, dl-α-tocophelol, nordihydroguaiaretic acid, methylhydroxyanisole, propyl gallate, guaiac, L-cysteine hydrochloride and butyl hydroxyanisole), preservatives (e.g. benzoic acid, sodium benzoate, salicylic acid, diphenyl, sorbic acid, potassium sorbate, dehydroacetic acid, sodium dehydroacetate, isobutyl p-oxybenzoate, isopropyl p-oxybenzoate, ethyl p-oxybenzoate, butyl p-oxybenzoate, propyl p-oxybenzoate, calcium propionate, sodium propionate and 2-hydroxydiphenyl), mis-food inhibitors (e.g. red pepper powders, Amaranth, Amaranth aluminium lake, Erythrosine, Erythrosine aluminium lake, New Coccine, Phloxine, Rose Bengal, Acid Red, Tartrazine, Tartrazine aluminium lake, Sunset Yellow FCF, Sunset Yellow FCF aluminium lake, Fast Green FCF, Fast Green FCF aluminium lake, Brilliant Blue FCF, Brilliant Blue FCF aluminium lake, Indigo Carmine, Indigo Carmine aluminium lake, β-carotene, and copper chlorophyll), and pigments (e.g. Lithol Rubine, lake red, Lithol Red, Rhodamin, tetrachlorotetrabromofluoresine, Brilliant lake red, Deep Maroon, toluidine red, Herindon pink, Fast acid magen, Permaton red, Eosin, violamine, Brilliant Fast Scarlet, Permanent red, Oil red, Fast red, azo pigment, phthalocyanine pigment and Red No. 1).

When desired, the pyridylpyridone compound (I) as the active component in the poison bait composition may be used in a microencapsulated form. As the film forming material for the microencapsulation, there may be used any one which can form a film having a strength tolerable to the impact which may be applied thereto at any later stage, i.e. in the course of tabletting. Examples of the film forming material are polyurea resins, polyurethane resins, polyamide resins, polyester resins, polycarbonate resins, polysulfonate resins, polysulfonamide resins and epoxy resins. Microencapsulation may be carried out by a per se conventional procedure such as interfacial polymerization process, in-situ polymerization process, drying in liquid process, phase separation process, spray drying process, fluidized bed process or cooling melted dispersion process, among which interfacial polymerization process is preferred. The microcapsules are favorable to have an average particle size of about 1 to about 1,000 microns and a particle size/film thickness ratio of about 10 to about 140.

The contents of the active component and the food attractant, the bait material, the other additive and/or

the auxiliary agent in the poison bait composition may vary within broad ranges. In general, the content of the pyridylpyridone compound (I) may be from about 0.01 to about 10 % by weight, preferably from about 0.1 to about 5 % by weight, based on the total weight of the poison bait composition. The content of the food attractant and/or the bait material may be from about 10 to about 99.99 % by weight, preferably from about 20 to about 99.9 % by weight. The content of the other additive and/or the auxiliary agent (including the film forming material for microencapsulation) is, if used, usually not more than about 89.99 % by weight, preferably not more than about 79.9 % by weight.

The poison bait composition may furthermore comprise, in addition to the pyridylpyridone compound (I) as the active component, one or more other insecticides (including insect growth inhibitors) in an amount of not more than about 2 % by weight. Examples of such other insecticides are organic phosphorus insecticides (e.g. calbinphos, chlorpyriphos, chlorpyriphosmethyl, cyanofenphos, cyanophos, diazinon, dichlorvos, fenitrothion, fenthion, malathion, naled, pirimiphosmethyl, prothiophos, pyridaphenthion, salithion, tetrachlorvinphos, trichlorfon, bromophos, propetamphos and azamethphos), carbamate insecticides (e.g. BPMC, carbaryl, CPMC, ethiofencarb, MPMC, MTMC, promecarb, swep and propoxur), pyrethroid insecticides (e.g. cypermethrin, cyphenothrin, deltamethrin, fenpropathrin, fenvalerate, kadethrin, permethrin, phenothrin, furamethrin, resmethrin, cyfluthrin, tralomethrin, fulcythrinate, cyhalothrin, tefluthrin, bifenthrin, benfulthrin and etofenprox), juvenile hormone-like insect growth inhibitors (e.g. methoprene, hydroprene, pyriproxyfen and fenoxycarb), chitin-formation suppressive type insect growth inhibitors (e.g. diflubenzuron, triflumuron, teflubenzuron, chlorfluazuron, flufenoxuron, hexafluron, N-2,6-difluorobenzoyl-N'-[2-fluoro-4-(1,1,2,2-tetrafluoroethoxy)phenyl]urea, N-2,6-difluorobenzoyl-N'-2-fluoro-4-trifluoromethylphenylurea and cyromazin), boric acid, hydramethylnon, sulfluramid, methoxadiazone and avermectin.

Preparation of the poison bait composition of the invention is normally accomplished in either one of two ways, i.e. dipping process and kneading process. Dipping process is applied when the food attractant and/or the bait material are solid. Namely, a solution of the pyridylpyridone compound (I) prepared by dissolving the same in an organic solvent or diluting any formulation (e.g. an emulsifiable concentrate, a wettable powder and flowables) comprising the same with water is impregnated into the food attractant and/or the bait material in a solid state, followed by evaporation of the organic solvent or water to give the poison bait composition.

In case of kneading process, the pyridylpyridone compound (I) or its microencapsulated product is mixed with the food attractant and/or the bait material, when desired, in combination with the other additive and/or the auxiliary agent, for instance, by the aid of a mixer to make a uniform mixture, optionally followed by pulverization. While the resultant powder is usable as it is, the same may be further tabletted by a per se conventional procedure to give a poison bait composition in a tablet form. Tabletting is normally effected under a compression of about 10 to about 2,000 $kg/cm^2$. Instead of tabletting, the powder may be admixed with water to make a solution, which is usable as a coating or application composition.

The thus obtained poison bait composition may be used as such. In order to keep safety, however, it may be placed in a plastic or resin container having a small exit so that only the insects to be controlled can take the same.

The poison bait composition of the invention exerts a remarkable controlling effect against a wide variety of insects, of which examples are as follows:

Insects belonging to Dictyoptera: cockroaches (Blattidae) such as German cockroach (Blattella germanica), Japanese cockcoach (Periplaneta japonica), smokybrown cockroach (Periplaneta fuliginosa), American cockroach (Periplaneta americana), brown cockroach (Periplaneta brunnea) and oriental cockroach (Blatta orientalis), etc.;

Insects belonging to Hymenoptera: ants (Formicidae) such as Monomorium intrudens, Formica japonica, Tetramorium caespium, Pheidole nodus, Lasius niger, Polyergus samurai, Monomorium pharaonis, Brachyponera chinensis, Soleropsis spp., and Vespidae such as Vespa spp., Polistes spp., etc.;

Insects belonging to Isoptera: termites such as Japanese subterranean termite (Reticulitermes speratus) and formosan subterranean termite (Coptotermes formosanus), etc.;

Insects belonging to Coleoptera: drugstore beetles (Anobiidae) such as cigarette beetle (Lasioderma serricorne) and biscuit beetle (Stegobium paniceum), darkling beetles (Tenebrionidae) such as red flour beetle (Tribolium castaneum) and confused flour beetle (Tribolium confusum) and cucujid beetles (Cucujidae) such as saw-toothed grain beetle (Oryzaephilus surinamensis) and flat grain beetle (Cryptolestes pusillus), etc.;

Insects belonging to Diptera: house flies (Muscidae) and vinegar flies (Drosophilidae), etc.

Of these insects, the poison bait composition is particularly effective in controlling cockroaches belonging to Dictyoptera.

Some pyridylpyridone compounds represented by the formula (I) are shown in Table 1:

Table 1

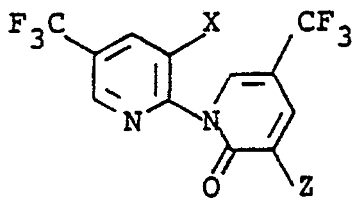

(I)

| Compound No. | X | Z | Melting point (°C) |
|---|---|---|---|
| 1 | Cl | Cl | 108.5 |
| 2 | F | Cl | 110.2 |
| 3 | Cl | CN | 144.2 |

Practical embodiments for preparation of the poison bait composition according to the invention are illustratively shown in the following Formulation Examples, in which part(s) and % by weight, unless otherwise indicated. Further, the compound numbers in these Examples correspond to those in Table 1.

Formulation Example 1

Each of Compound No. 1, 2 or 3 (30 mg) is dissolved in acetone (0.5 ml), and the resultant solution is impregnated into a piece of animal solid bait ("Solid bait CE-2" for breeding and propagation manufactured by Nihon Kurea K.K.) (3 g). Acetone is air-dried to give a poison bait containing 1 % of the active ingredient.

Formulation Example 2

Each of Compound No. 1, 2 or 3 (25 mg) is dissolved in acetone (0.5 ml), and the resultant solution is uniformly mixed with powdered animal bait ("powdered bait CE-2" for breeding and propagation manufactured by Nihon Kurea K.K.) (5 g). Acetone is air-dried to give a poison bait containing 0.5 % of the active ingredient.

Formulation Example 3

Compound No. 1 (60 parts) and highly dispersed silicic acid (40 parts) are stirred in a mixer. The resultant mixture (0.84 part) is combined with methyl cellulose (0.75 part) and sucrose (98.41 parts) while mixing at room temperature and pulverized to obtain a water-dispersible poison bait containing 0.5 % of the active ingredient.

Formulation Example 4

A mixture of Compound No. 2 (10 parts) and linolic acid (65 % purity; 10 parts) is heated at 60 °C until it turns to a transparent liquid. Soybean oil (80 parts) is added to the resultant liquid, which is then cooled to room temperature to give a liquid poison bait containing 10 % of the active ingredient.

Formulation Example 5

A mixture of Compound No. 3 (10 parts) and oleinic acid (15 parts) is heated at 80 °C until it turns to a transparent liquid. Soybean oil (75 parts) is added to the resultant liquid, which is then cooled to room temperature to give a liquid poison bait containing 10 % of the active ingredient.

Formulation Example 6

A mixture of Compound No. 1 (1 part), sucrose (70 parts), chrysalis powders (27 parts) and hydroxymethyl cellulose (2 parts) is uniformly mixed with addition of a suitable amount of water. The resultant mixture is granulated to make granules of about 1.0 mm in diameter. Upon drying, water is removed to give a granulated poison bait containing 1 % of the active ingredient.

Formulation Example 7

A mixture of Compound No. 3 (1 part), honey (70 parts), Euphauciasea granules (27 parts) and hydroxymethyl cellulose (2 parts) is uniformly mixed. The resultant mixture is granulated to make granules of about 1.5 mm in diameter. Upon drying, water is removed to give a granu lated poison bait containing 1 % of the active ingredient.

Formulation Example 8

A mixture of Compound No. 1 (0.5 part) in sesame oil (3 parts) is combined with black sugar (5 part), crystalline cellulose (30 parts), potato starch (61.37 parts), butyl hydroxyanisole (0.03 part) and dehydroacetic acid (0.1 part), and uniformly mixed. The resultant mixture is tabletted under a compression of 100 kg/cm$^2$ to make tablets, each weighing about 4 g (diameter, 30 mm), containing 1 % of the active ingredient.

Formulation Example 9

A mixture of Compound No. 3 (0.8 part) in corn oil (5 parts) is combined with soft brown sugar (22 parts), crystalline cellulose (35 parts), corn starch (31.58 parts), nordihydroguaiaretic acid (0.02 part), dehydroacetic acid (0.1 part), furaneol (4-hydroxy-2,5-dimethyl-3(2H)-furanone) (5 parts) and red pepper powders (0.5 part) and uniformly mixed. The resultant mixture is tabletted under a compression of 100 kg/cm$^2$ to make tablets, each weighing about 4 g (diameter, 30 mm), containing 0.8 % of the active ingredient.

Formulation Example 10

Each of Compound No. 1, 2 or 3 (30 mg) is dissolved in acetone (0.3 ml), and the resultant solution is combined with a mixture of defatted powdered milk (2 g) and granulated sugar (1 g). Acetone is air-dried to give a poison bait containing 1 % of the active ingredient.

Formulation Example 11

Each of Compound No. 1, 2 or 3 (10 mg) is dissolved in acetone (1 ml), and the resultant solution is combined with granulated sugar (10 g). Acetone is air-dried to give a poison bait containing 0.1 % of the active ingredient.

Formulation Example 12

Each of Compound No. 1, 2 or 3 (2 parts), dextrin (94.9 parts), dehydroacetic acid (0.1 part) and furaneol (4-hydroxy-2,5-dimethyl-3(2H)-furanone) (3 parts) are uniformly mixed. The resultant mixture is tabletted under a compression of 15 kg/cm$^2$ to make tablets, each weighing about 4 g (diameter, 30 mm), containing 2 % of the active ingredient.

Formulation Example 13

Each of Compound No. 1, 2 or 3 as microencapsulated with polyurethane (5 parts), dextrin (94.9 parts) and dehydroacetic acid (0.1 part) are uniformly mixed. The resultant mixture is tabletted under a compression of 15 kg/cm$^2$ to make tablets, each weighing about 4 g (diameter, 30 mm), containing 5 % of the active ingredient.

Formulation Example 14

Each of Compound No. 1, 2 or 3 (1 part), sesame oil (3 parts), dextrin (66 parts) and powdery dry yeast (30 parts) are uniformly mixed. The resultant mixture is tabletted under a compression of 1,000 $kg/cm^2$ to make tablets, each weighing about 5 g (diameter, 30 mm), containing 1 % of the active ingredient.

Formulation Example 15

A base mat (2.5 x 1.5 x 0.28 cm; weight, 0.75 g; a solid fibril board made of a mixture of cotton linter and pulp) is impregnated with a solution of sucrose (50 mg) and powdered milk (50 mg) in water (1 ml) and air-dried, and the mat is uniformly dipped in a solution of each of Compound No. 1, 2 or 3 (10 mg) in acetone (1 ml), followed by air-drying to make a poison bait.

Formulation Example 16

Euphauciasea powders (40 parts), sucrose (40 parts), dextrin (10 parts) and peanut oil (10 parts) are uniformly mixed, and the mixture is granulated to make granules having an average particle size of about 0.7 mm. The thus obtained granules (0.3 g) are uniformly coated with a solution of each of Compound No. 1, 2 or 3 (30 mg) in acetone (0.1 ml) is uniformly coated, followed by air-drying to make a granulated poison bait containing 1 % of the active ingredient.

The biological activity of the pyridylpyridone compound (I) is set forth in the following Test Examples wherein the compound numbers correspond to those shown in Table 1. Further, the compounds shown in Table 2 are used for comparison.

Table 2

| Compound symbol | Structure | Remarks |
|---|---|---|
| A | $H_3BO_3$ | boric acid |
| B | 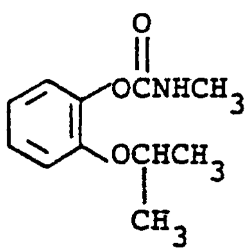 | propoxur |
| C | 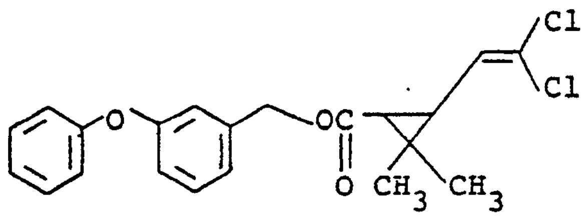 | permethrin |
| D | 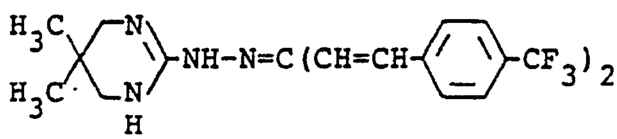 | hydra-methylnon |
| E | 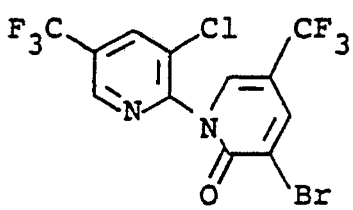 | JP-A-61-72754; Compound No. 4 |
| F | 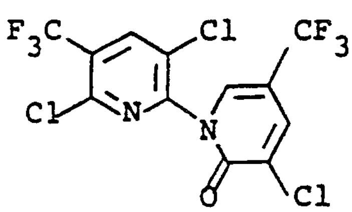 | JP-A-61-72754; Compound No. 7 |

Test Example 1

The baits designated to have an active concentration of 0.1 % was prepared in accordance with Formulation Example 2 and subjected to test. Control baits comprising the prior art compounds were similarly prepared and used for test.

Into a polyethylene cup (diameter, 12 cm; height, 7 cm) kept at 25° C, there were placed a roach hide made of filter paper (3 x 4.5 cm), water, the designated bait (1 g) and an untreated bait (1 g) having the same composition as the designated bait except the active component, the latter three being respectively

admitted in small plastic cups (diameter, 3 cm; height, 2 cm), and twenty adult German cockroaches (Blattella germanica) (even numbers in male and female, resistant to any insecticide) were released into the polyethylene cup. Two and three weeks thereafter, the survived number of cockroaches was observed, and their percent mortality was calculated with two replications. In case of the control, the designated bait was replaced by the untreated bait, and observation was made in the same manner as above.

The results are shown in Table 3.

Table 3

| Test Compound | Mortality (%) | |
|---|---|---|
| | Two weeks | Three weeks |
| 1 | 100 | 100 |
| 2 | 90 | 100 |
| 3 | 95 | 100 |
| A | 2.5 | 7.5 |
| B | 15 | 15 |
| C | 2.5 | 2.5 |
| D | 57.5 | 87.5 |
| E | 20 | 37.5 |
| F | 0 | 2.5 |
| Untreated | 0 | 0 |

Test Example 2

The baits designated to have an active concentration of 0.1 % was prepared in accordance with Formulation Example 11 and subjected to test. Control baits comprising the prior art compounds were similarly prepared and used for test.

Ten adult ants (Formica japonica) were admitted in a polyethylene cup (diameter, 9.5 cm; height, 4.5 cm) with water and the designated bait (0.3 g) enclosed in another plastic cup (diameter, 2 cm; height, 1 cm). Two days thereafter, the survived number of the ants was observed and their percent mortality was calculated with two replications. The results are shown in Table 4.

Table 4

| Test Compound | Mortality (%) |
|---|---|
| 1 | 100 |
| 2 | 100 |
| 3 | 100 |
| A | 0 |
| B | 45 |
| C | 40 |
| D | 0 |
| E | 35 |
| F | 15 |
| Untreated | 0 |

Test Example 3

The baits designated to have an active concentration of 1 % was prepared in accordance with Formulation Example 10 and subjected to test. Control baits comprising the prior art compounds were similarly prepared and used for test.

Twenty pupal house flies (Musca domestica) resistant to pyrethroid insecticides were released in a polyethylene cup (diameter, 12 cm; height, 7 cm) with water and the designated bait (1 g) enclosed in another plastic cup (diameter, 3.5 cm; height, 2.5 cm), and kept at 25 °C. Two days thereafter, the survived number of the house flies was observed and their percent mortality was calculated with two replications. The results are shown in Table 5.

Table 5

| Test Compound | Mortality (%) |
|---|---|
| 1 | 100 |
| 2 | 100 |
| 3 | 100 |
| A | 0 |
| B | 25 |
| C | 2.5 |
| D | 42.5 |
| E | 45 |
| F | 20 |
| Untreated | 0 |

Test Example 4

The baits designated to have an active concentration of 1 % was prepared in accordance with Formulation Example 14 and subjected to test. Control baits comprising the prior art compounds were similarly prepared and used for test.

Twenty male adult of smokybrown cockroaches (Periplaneta fuliginosa) were released in a polystyrene container (61 x 40 x 14.5 cm). The designated bait (1 tablet, about 5 g) and an untreated bait (1 tablet, about 5 g) having the same composition as the designated bait except the active component both enclosed in each aluminium dish (diameter, 4.5 cm; height, 1 cm) were set at two corners diagonally in the container. Moreover, a wooden made roach shelter (15 x 15 x 3 cm) and a water source were set at the side of the untreated bait in the container, and kept at 25°C. Eleven and fourteen days thereafter, the survived number of the cockroaches was observed and their percent mortality was calculated with two replications. In case of the control, the designated bait was replaced by the untreated bait, and observation was made in the same manner as above. The results are shown in Table 6.

**Table 6**

| Test Compound | Mortality (%) | |
|---|---|---|
| | Eleven days | Fourteen days |
| 1 | 100 | 100 |
| 2 | 85 | 100 |
| 3 | 90 | 100 |
| A | 10 | 20 |
| B | 40 | 50 |
| C | 15 | 20 |
| D | 50 | 70 |
| E | 20 | 35 |
| F | 5 | 10 |
| Untreated | 5 | 10 |

## Claims

1. A poison bait composition for control of harmful insects which comprises as an active component a pyridylpyridone compound of the formula:

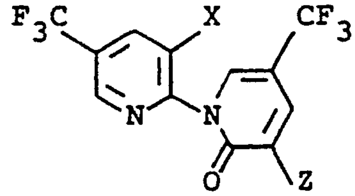

wherein X is a fluorine atom or a chlorine atom and Z is a chlorine atom or a cyano group.

2. The bait composition according to claim 1, wherein X in the active pyridylpyridone compound is a chlorine atom.

3. The bait composition according to claim 1, wherein X and Z in the active pyridylpyridone compound are each a chlorine atom.

4. The bait composition according to claim 1, wherein the active component is used in an amount of about 0.01 to about 10 % by weight to the total composition.

5. The bait composition according to claim 1, wherein the active component is used in an amount of about 0.1 to about 5 % by weight to the total composition.

6. The bait composition according to claim 1, which comprises at least one of food attractants and the bait materials.

7. The bait composition according to claim 1, which comprises the pyridylpyridone compound and the food attractants and/or the bait materials respectively in contents of from about 0.01 to about 10 % by weight and from about 10 to about 99.99 % by weight.

8. The bait composition according to claim 1, which comprises the pyridylpyridone compound and the food attractants and/or the bait materials respectively in contents of from about 0.1 to about 5 % by weight and from about 20 to about 99.9 % by weight.

9. The bait composition according to claim 1, wherein the insects are cockroaches.

10. A method for controlling harmful insects by applying the bait composition according to claim 1.

11. The method according to claim 10, in which the insects are cockroaches.

European Patent Office

# EUROPEAN SEARCH REPORT

Application Number

**EP 90 12 2837**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | CENTRAL PATENTS INDEX, BASIC ABSTRACTS JOURNAL, week 8515, 5th June 1985, section C, abstract no. 85-089631/15, Derwent Publications Ltd, London, GB; & JP-A-60 038 363 (SUMITOMO) 27-02-1985 | 1-11 | A 01 N 43/40 |
| A | CENTRAL PATENTS INDEX, BASIC ABSTRACTS JOURNAL, week 8621, 16th July 1986, section C, abstract no. 86-135156/21, Derwent Publications Ltd, London, GB; & JP-A-61 072 754 (SUMITOMO) 14-04-1986 (Cat. D) | 1-11 | |
| A | EP-A-0 272 824 (ICI) * Claims 1,7 * | 1-11 | |

TECHNICAL FIELDS SEARCHED (Int. Cl.5)

A 01 N

The present search report has been drawn up for all claims

| Place of search | Date of completion of search | Examiner |
|---|---|---|
| The Hague | 19 March 91 | DECORTE D. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document